# EUROPÄISCHE PATENTANMELDUNG

(11) **EP 2 998 712 A1**
(43) Veröffentlichungstag der Anmeldung: **23.03.2016**
(21) Anmeldenummer: 15002427.1
(22) Anmeldetag: 14.08.2015
(51) Int. Cl.: G01G 3/12, G01G 17/00, G01L 1/24, B65D 90/50, G01G 23/00

(54) **VORRICHTUNG ZUR GEWICHTSERFASSUNG VON BEHÄLTERN, INSBESONDERE SILOS**

(30) Priorität: 16.09.2014 DE 102014014252
(71) Anmelder: P+W Metallbau GmbH & Co. KG, 88074 Meckenbeuren (DE)
(72) Erfinder: Lang, Wolfgang, 88069 Tettnang (DE); Auer, Jürgen, 88069 Tettnang (DE)
(74) Vertreter: Riebling, Peter

(57) **Zusammenfassung**

Eine Vorrichtung zur Gewichtserfassung von Großbehältern, insbesondere Silos oder dgl., die mit einer Standzarge (1) auf einem Fundament (8) oder einer anderen Referenzfläche abgestützt sind, mittels einer faseroptischen Deformationsmessanordnung, bei der in mindestens einen gewichtsbedingt deformierbaren Lichtfaserleiter (5, 5') eine Lichtwelle einleitbar ist, und die Deformation des Lichtfaserleiters durch Erfassung der Veränderung mindestens eines Parameters der Lichtwelle mit einer optisch-elektronischen Messanordnung erfasst und ausgewertet wird, ist dadurch gekennzeichnet, dass die Standzarge (1) an der Fußseite auf einem am Außenumfang der Standzarge (1) umlaufenden, mindestens teilweise axial verformbaren elastischen Gewichtsmessring (2,3; 31, 31 a) gegenüber dem Fundament (8) oder einer anderen Referenzfläche abgestützt ist, und dass die durch das Silogewicht bedingte axiale Verformung des Gewichtsmessrings (2,3; 31, 31 a) auf mindestens einen Lichtfaserleiter (5, 5') im Sinn einer Längenänderung einwirkt, die von der Messvorrichtung erfassbar ist.

## Beschreibung

Die Erfindung betrifft eine Vorrichtung zur Gewichtserfassung von Großbehältern, insbesondere Silos oder dergleichen.

Bei der Gewichtserfassung des Gewichtes von Großbehältern besteht das Bedürfnis, möglichst genau den Inhalt des Behälters zu erfassen. Derartige Behälter sind insbesondere Silos, die einen Durchmesser von 1 Meter bis 10 Meter aufweisen und Höhen im Bereich von zum Beispiel 5 bis 30 Metern aufweisen.

Solche Großbehälter müssen jedoch nicht rund profiliert sein. Es kann sich auch um polygonale Großbehälter handeln, wie zum Beispiel Container, Oktabins und andere Großbehälter, die auf einer Stützstruktur, wie zum Beispiel dem Erdboden, oder auch auf einer Stahlkonstruktion in einer Halle oder dergleichen, stehen.

Bei Großbehältern, insbesondere bei Silos, besteht demnach das Bedürfnis, das Gewicht der Füllung möglichst genau zu bestimmen, obwohl der Behälter klimatischen Einwirkungen, wie zum Beispiel Windlast, Schneelast und dergleichen, ausgesetzt ist. Das Gewicht muss möglichst genau unabhängig von einwirkenden Störgrößen bestimmbar sein.

Zur Bestimmung des Gewichtes von Großbehältern sind gravimetrische und volumetrische Messmethoden bekannt. Bei der gravimetrischen Messmethode werden punktförmig am Umfang des Silos angeordnete Wägemodule verwendet, die im Bereich zwischen dem Standring und dem Fundament angeordnet sind. Dies erfordert, dass eine punktuelle Kraftanleitung vom Standring auf das Wägemodul erfolgt. Dies erfordert wiederum eine Verstärkung der Stützstruktur des Silos in diesem Bereich, was mit einem hohen Bauaufwand und mit erhöhten Kosten verbunden ist.

Die gravimetrischen Messmethoden sind relativ genau, jedoch sind sie sehr aufwendig und erfordern eine spezielle Anpassung der Silokonstruktion an die hierfür verwendeten Wägemodule.

Die DE 101 29 687 C1 und die DE 103 41 585 A1 zeigen ein Verfahren zur Gewichtsbestimmung des Siloinhalts eines Silos durch Gewichtsmessung des Silobehälters, bei der von einer Auswerteeinrichtung die Ausgangssignale einer Mehrzahl von Gewichtssensoren erfasst und auswertet. Die Gewichtssensoren sind an der Trägerkonstruktion (Stützkonstruktion) des Silobehälters angebracht und geben jeweils ein von der auf sie einwirkenden Gewichtskraft abhängiges Ausgangssignal ab. Damit besteht jedoch der Nachteil, dass das Gewicht des Silos nur über die Gewichtssensoren einer speziell hierzu ausgebildeten Trage- und Stützkonstruktion erfasst wird.

Die DE 40 37 077 A1 offenbart ein Verfahren und eine Einrichtung zur faseroptischen Kraftmessung in einem unter Vorspannung stehenden mechanischen Bauteil, an dessen Innenumfang ein Lichtwellenleiter angeordnet ist, dessen Phasenverschiebung zwischen einer Ein- und einer Auskoppelstelle ein Maß für die Vorspannung des mechanischen Bauteils ist. Die Kraftmessung beruht auf der spannungsinduzierten Doppelbrechungsänderung eines Monomode-Lichtwellenleiters.

Ein ähnliches Messprinzip zeigt die DE 33 11 524 A1, bei dem ein als faseroptischen Sensor ausgebildeter Lichtwellenleiter senkrecht zur seiner Längsachse einer Krafteinwirkung unterworfen wird und die Kompression des Lichtwellenleiters als Änderung des Polarisationszustandes des Lichtes im Lichtwellenleiters erfasst wird.

Nachteil dieser Anordnung ist, dass eine Gewichtserfassung sehr hoher Gewichte im Bereich zwischen 2 bis 5000 t nicht möglich ist und die Erfassung der Kompression eines Lichtwellenleiters nur mit hohem messtechnischem Aufwand zu bewältigen ist.

Die DE 696 07 067 T2 offenbart eine Kraftmesseinrichtung mit einem optischem Sensor mit einer vom Lastort unabhängigen Empfindlichkeit, insbesondere für einen Personenwaage, bei der unabhängig von der möglicherweise schräg verlaufenden Belastung mit einem menschlichen Körper ein von der Schräglage unbeeinflusstes Messsignal erzeugt werden soll. Das Messprinzip beruht auf der Erfassung der Phasenverschiebung einer gewichtsbedingten Kompression eines Lichtwellenleiters, nicht aber auf der Erfassung von dessen Längenänderung.

Bei der volumetrischen Messmethode erfolgt eine Volumenbestimmung des in den Silo eingefüllten Schüttgutes. Die Bestimmung der Füllhöhe erfolgt mit einer berührungslosen Füllstandsmessung in das Schüttgut hinein, was mit einem erheblichen Fehler behaftet ist.

Der Erfindung liegt ausgehend von der DE 101 29 687 C1 oder der DE 103 41 585 A1 die Aufgabe zugrunde, eine Gewichtsmessung an Großbehältern, insbesondere an Silos, so weiterzubilden, dass eine gravimetrische Gewichtsmessung am Silo ohne wesentlichen Umbau des Silos erfolgen kann.

Zur Lösung der gestellten Aufgabe ist die Erfindung durch die technische Lehre des Anspruches 1 gekennzeichnet.

Wesentliches Merkmal der Erfindung ist, dass an der Fußseite des bauseits vorhandenen, umlaufenden Silo-Standrings ein Gewichtsmessring angeordnet ist, dessen - durch das Silogewicht bedingte - axiale Verformung auf mindestens ein Lichtfaserelement übertragen wird, das durch die axiale Verformung des Gewichtsmessringes in radialer Richtung ausgedehnt wird und durch diese radiale Ausdehnung eine Änderung des Polarisationszustandes erfährt, die von einer optisch-elektronischen Messvorrichtung erfasst wird.

Mit der gegebenen technischen Lehre ergibt sich der Vorteil, dass im Wesentlichen die Gewichtskraft des Silos auf einen am Fuß des siloseitigen Standrings angeordneten Gewichtsmessring eingeleitet wird, der elastisch in axialer Richtung gegenüber einem festen Fundament oder einer anderen Referenzfläche zusammendrückbar ist. Der Gewichtsmessring besteht in einem bevorzugten Ausführungsbeispiel im Wesentlichen aus einem siloseitig befestigten oberen Standring, der mit seiner Unterseite auf einen Verdrängungskörper wirkt, der elastisch verformbar ist, der wiederum auf einem fundamentseitigen, unteren Standring lagert. Die elastische Zusammendrückung des Verdrängungskörpers im Gewichtsmessring führt zu einer Durchmesserveränderung der am Verdrängungskörper angeordneten Lichtfaserleiter, die messtechnisch erfasst wird.

Es handelt sich demnach um eine neuartige Gewichtsbestimmung des Siloinhaltes, indem im umlaufenden Standring des Silos eine Hohlkammer / Zwischenlage eingearbeitet ist. In dieser befindet sich ein faseroptischer Lichtleiter, welcher mit einem Verdrängungskörper (zum Beispiel aus Kunststoff) kraft- und/oder form- und/oder stoffschlüssig verbunden ist. Die Lichtleiterfaser erfährt mit der Zu- bzw. Abnahme des Gewichts des Siloinhaltes eine Zu- bzw. Abnahme der Länge der Faser.

Zu diesem Zweck wird bevorzugt ein Auswertegerät mit Frequenzgenerator verwendet, eine Laserquelle, ein optisches Modul und eine Empfänger-Mikroprozessoreinheit, wobei die Signale eines LWL-Kabels als Messeinheit mit dem Auswertegerät ausgewertet werden.

Der Gewichtsmessring wird im belasteten Zustand in axialer Richtung gestaucht, und ein im Bereich des Gewichtsmessrings angeordneter elastisch verformbarer Verdrängungskörper wird damit ebenfalls elastisch gestaucht und verdrängt den am Außenumfang des Verdrängungskörpers angesetzten Lichtfaserleiter in eine - in radialer Richtung auswärts gerichtete - Verformung, die mit einer Längenänderung des Lichtfaserleiters einhergeht.

Weil der Gewichtsmessring nun über seinen gesamten Umfang gleichmäßig von der Gewichtslast des Silos beaufschlagt ist, bedarf es keiner gesonderten Stützkonstruktion, wie sie beim Einbau von punktförmig messenden Sensoren erforderlich ist. Ein solcher Gewichtsmessring kann deshalb auch bei vorhandenen Silos nachgerüstet werden, weil es keiner Umbauten bedarf.

Die Erfindung ist jedoch nicht auf eine radiale Verdrängung des Lichtfaserleiters durch einen im Zwischenraum zwischen dem oberen und unteren Standring des Silos angeordneten Verdrängungskörper beschränkt.

In einer anderen Ausgestaltung kann es auch vorgesehen sein, dass eine plattenförmige Verformung eines Verdrängungskörpers (Durchbiegung eines plattenförmigen, elastischen Verdrängungskörpers) in axialer Richtung der Gewichtslast zur Längenänderung des Lichtfaserleiters herangezogen wird.

Das erfindungsgemäße Verfahren besteht aus einer hochauflösenden Längenmessung, wobei als Beispiel ein Messring vorgesehen ist, der unter anderem einen unter Gewichtslast elastisch verformbaren Verformungskörper aufweist, über dessen Außenumfang ein oder mehrere Lichtwellenleiter in einer oder mehreren Windungen aufgebracht sind. Bevorzugt wird der Umfang des Verdrängungskörpers mit einer oder mehreren Windungen des Lichtwellenleiters umwickelt. Wird nun ein Druck auf den elastischen Verdrängungskörper aufgebracht, der auf seine (obere) Planfläche einwirkt, wird sich dieser in axialer Richtung zusammenpressen und hierbei eine Durchmesservergrößerung erfahren. Wenn nun der Lichtfaserleiter über den Umfang dieses Verdrängungskörpers gewickelt ist, wird auch der Lichtfaserleiter eine Längenänderung erfahren, und diese Längenänderung ist ein Maß für die axiale Zusammendrückung oder radiale Ausdehnung dieses Verdrängungskörpers. Damit ist eine genaue Gewichtserfassung des Silos möglich.

Bei einem Prototyp der Erfindung konnten folgende Aussagen getroffen werden:
a) Die Länge des Lichtwellenleiters ändert sich proportional zur einwirkenden Last in einem sehr großen Bereich. Somit können auch große Gewichtsunterschiede eines Silos bei einem Leergewicht von 2 bis 5 Tonnen bis zu einem Füllungsgewicht von bis zu 1000 Tonnen linear erfasst werden.
b.) Auch nach der maximalen Verformung durch die Maximallast eines Silos im Bereich von 1000 Tonnen bleibt die Empfindlichkeit der Messanordnung für kleine Änderungen des Silos erhalten.
c.) In einem Pionierversuch erfuhr der Lichtfaserleiter eine Längenänderung im elastischen Bereich um ca. 0,6 %.
d.) der Lichtwellenleiter war optisch mit einer Messeinrichtung verbunden. Die Messeinrichtung wies einen Lichtsender und einen Lichtempfänger zur Koppelung an den Lichtwellenleiter auf. Der Lichtsender moduliert das Licht. Der Lichtsender und der Lichtempfänger waren mit einer Steuereinrichtung verbunden, wobei die Steuereinrichtung die Phasendifferenz des modulierten Lichtes zwischen Lichtsender und Lichtempfänger im Belastungsfall bestimmte und mit wenigstens einem gespeicherten Wert verglich, der sich aus der Phasendifferenz des Lichtes beim nicht verlängerten, unbelasteten Lichtwellenleiters ergab. Die sich hieraus ergebende Differenz der Phase ist ein Maß für die Füllung des Großbehälters.

Die Erfindung umfasst neben einer Gewichtserfassung des Silos auch noch eine Temperaturkompensation. Diese kann in einem bevorzugten Ausführungsbeispiel aus einem zweiten Lichtwellenleiter bestehen, der keiner gewichtsbedingten Längenausdehnung ausgesetzt ist und daher unverformt bleibt. Sein Messsignal wird mit dem Messsignal des gewichtsverformten Lichtwellenleiters verglichen, um eine Temperaturkompensation zu erreichen.

Eine alternative Temperaturkompensation ist dadurch gegeben, dass parallel zum Lichtwellenleiter ein metallischer Leiter verlegt wird, der mit dem Lichtwellenleiter über seine gesamte Länge thermisch gekoppelt ist. Der elektrische Widerstand des metallischen Leiters ist ein Maß für die Temperatur des Lichtwellenleiters und wird für die Temperaturkompensation genutzt.

Das Prinzip der Erfindung besteht darin, dass das Gewicht des Silos oder des Großbehälters auf einem elastisch zusammendrückbaren Verdrängungskörper ruht und der durch die Konstruktion ausgeübte Druck den Verdrängungskörper so verformt, dass sich sein Umfang (oder seine Deckfläche) durch den einwirkenden Druck verformt. Entlang des Umfangs des Körpers oder eines Teils davon wird ein Lichtwellenleiter so befestigt, dass seine Länge einer Änderung des Umfangs des Körpers folgt. Die Länge des Lichtwellenleiters ist ein Maß für den auf den Körper einwirkenden Druck.

Der Verdrängungskörper kann verschiedene Formgebungen aufweisen; er kann zum Beispiel als Scheibe oder Ring ausgebildet sein; er kann jedoch auch nur sektorförmig am Umfang des Standrings verteilt im Bereich des Gewichtsmessringes angeordnet sein.

Das Messprinzip zur Erfassung der Längenänderung eines Lichtfaserleiters ist dergestalt ausgebildet, dass eingangsseitig über eine Ankopplungsstelle am Lichtfaserleiter allgemein ein Licht, bevorzugt jedoch ein monochromatisches Licht, zum Beispiel über eine Laserquelle, eingespeist wird und hierbei eine optische Welle über die Länge des Lichtfaserleiters erzeugt, deren Laufzeit und/oder Phase und/oder Frequenz und/oder Amplitude an der Auskopplungsstelle erfasst wird. Erfährt nun der Lichtfaserleiter eine durch das Gewicht des Silos bedingte Längenänderung, dann verändert sich auch die Laufzeit und/oder die Phase und/oder die Amplitude der eingespeisten Welle, und diese Änderung des ausgekoppelten Lichtleitersignals wird als Längenänderung erfasst und ist damit direkt ein Maß für das Gewicht des Silos.

In einer bevorzugten Ausgestaltung der Erfindung ist es vorgesehen, dass der Gewichtsmessring aus einem oberen Standring besteht, auf dem unmittelbar die Standzarge des Silos aufsitzt, und aus einem darunter angeordneten unteren Standring, der parallel und etwa fluchtend zum oberen Standring angeordnet ist.

Im Zwischenraum zwischen dem oberen Standring und dem unteren Standring ist ein am Umfang des Silos umlaufender Lichtfaserleiter angeordnet, der über eine Ankopplungsstelle mit einer Laserlichtquelle verbunden ist, und der sich über einen Winkel von zum Beispiel 330 bis 360 Grad über den Umfang der Standzarge und des Gewichtsmessringes erstreckt, um so möglichst vollumfänglich die Gewichtsänderungen des Silos zu erfassen, die über die Standzarge auch punktuell unterschiedlich auf den Gewichtsmessring eingeleitet werden.

Bei Windlast, Schneelast und anderen Störgrößen erfolgt eine ungleichmäßige Gewichtseinleitung der Standzarge auf den Gewichtsmessring, was mit der vorliegenden Erfindung sehr gut erfassbar ist, denn an der durch Windlast zusammengedrückten Seite des Gewichtsmessringes erfolgt eine größere Längenausdehnung des Lichtfaserleiters als vergleichsweise an dem gegenüberliegenden Ende, wo keine Windlast anliegt. Hierdurch kommt es zu einer Kompensation von eventuellen Schräglagen des Silos.

In einer Weiterbildung der Erfindung ist es vorgesehen, dass der Lichtfaserleiter nicht umlaufend über den Gewichtsmessring angeordnet ist, das heißt also über einen Winkel von zum Beispiel 330 bis 360 Grad den Gewichtsmessring überspannt, sondern dass die Längenänderung von mehreren, sektorweise auf einem gleichen Umfang angeordneten Lichtfaserleiter erfasst wird.

Diese sind demnach sektorweise über den Umfang verteilt am Gewichtsmessring angeordnet, sodass in jedem Sektor des Gewichtsmessringes eine eigene Erfassung der Längenänderung des dort angeordneten Lichtfaserleiters erfolgt. Auf diese Weise erhält man zum Beispiel bei der Messung von vier unterschiedlichen Sektoren, die bevorzugt gegenüberliegend angeordnet sind, vier verschiedene Messsignale, und eine Mittelung aus diesen Messsignalen führt dann zu einem sehr genauen Ergebnis des Gewichts des Großbehälters. Die Messsignale können auch in der Art einer Wheatstoneschen-Messbrücke miteinander gekoppelt sein.

Das Messprinzip der vorliegenden Erfindung bezieht sich demnach darauf, dass im Zwischenraum zwischen einem oberen und einem unteren Standring - der auch einteilig ausgebildet sein kann - mindestens ein sich längs des Umfangs der Standzarge erstreckender Verdrängungskörper angeordnet ist, der durch die Gewichtskraft der Standzarge, die auf den oberen Standring eingeleitet wird, komprimiert wird, sodass sich dieser in radialer Richtung ausdehnt.

Ein solcher Verdrängungskörper kann sich als umlaufender Ring über den gesamten Umfang des Gewichtsmessringes erstrecken. Er kann aber auch sektorförmig am Umfang verteilt angeordnet sein. Beispielsweise kann bei einer solchen Ausführungsform der Verdrängungskörper zum Beispiel jeweils nur einen Umfangswinkel von 60 Grad mit jeweils 30 Grad dazwischen liegendem Freiraum überspannen, sodass bei einem Umfangswinkel von 360 Grad sechs derartig unterteilte Verdrängungskörper angeordnet sind.

Statt der durchgehenden Anordnung eines solchen Verdrängungskörpers können also auch sektorförmig ausgebildete Verdrängungskörper über den Umfang des Standrings verteilt angeordnet sein, wobei jedoch stets der eine oder die mehreren Lichtfaserleiter über den radial äußeren Umfang des Verdrängungskörpers angelegt sind, sodass der jeweilige Lichtfaserleiter die radial auswärtsgerichtete Verdrängung des Verdrängungskörpers mitmacht und hierdurch eine Längenänderung erfährt.

Die Erfindung ist nicht auf die Anordnung eines einzigen Lichtfaserleiters beschränkt, der als einzige Wicklung über den Außenumfang des Verdrängungskörpers gewickelt ist. Es können auch mehrere Wicklungen von Lichtfaserleitern über den Außenumfang des Verdrängungskörpers gewickelt werden. Die Wicklungen können kraftschlüssig und/oder stoffschlüssig und/oder formschlüssig mit dem Verdrängungskörper verbunden sein.

In einer anderen Ausgestaltung der Erfindung ist es vorgesehen, dass die Lichtfaserleiter in einem Faserbündel angeordnet sind, welches zum Beispiel von einem Kabelmantel eingefasst ist. Das vom Kabelmantel eingefasste Faserbündel kann über den äußeren Umfang des Verdrängungskörpers ein- oder mehrlagig gewickelt werden.

Die Erfindung bezieht sich demnach darauf, dass zwischen einem oberen, von der Standzarge des Silos oder einem anderen Großbehälter gewichtsbelasteten Standring und einem festen Fundament ein Aufnahmeraum gebildet ist, in dem ein elastisch verformbarer Verdrängungskörper angeordnet ist, der in einem bevorzugten Ausführungsbeispiel aus Kunststoff gebildet ist. Ein solcher Kunststoff kann zum Beispiel ein Polymer, ein Polyurethan, ein Polypropylen oder ein anderes elastisch verformbares Kunststoffmaterial oder ein geschäumtes Metall sein. Das Kunststoffmaterial erfährt bevorzugt eine Formänderung, die im Bereich von einigen Hundert Mikrometern bis einigen Millimetern liegt.

Der Verdrängungskörper kann als massiver Kunststoffkörper ausgebildet sein; er kann jedoch auch als Hohlkörper ausgebildet sein oder er kann mit einem flüssigen oder gasförmigen Medium gefüllt sein. Er kann demzufolge auch als gasgefüllter oder als mit einer Hydraulikflüssigkeit gefüllter Schlauch oder dergleichen ausgebildet sein.

Das Profil des ringförmigen oder teilringförmigen Verdrängungskörpers kann in beliebiger Weise ausgebildet sein. Es kann rechteckig, quadratisch, rund oder mehreckig ausgebildet sein. Es kann auch in einer besonderen Ausgestaltung kegelförmig ausgebildet sein, wie anhand der späteren Ausführungsbeispiele noch beschrieben wird.

Das Prinzip der Erfindung ist jedoch stets gleich, dass durch eine Plankraft auf die Oberseite des Verdrängungskörpers dieser in senkrechter Richtung hierzu radial auswärts verformt wird, und diese radial auswärtsgerichtete Verformungskraft wird als Längenänderung auf die dort angeordneten Lichtfaserleiter erfasst.

In einer anderen Ausgestaltung der Erfindung kann es jedoch auch vorgesehen sein, dass die auf die Planseite des Verdrängungskörpers eingeleitete Verformungskraft den Verdrängungskörper bauchförmig durchbiegt und die Durchbiegung als Längenänderung von dort angeordneten Lichtfaserleitern erfasst wird.

Ebenso ist die Kombination beider Ausführungsbeispiele möglich, so dass mit einem ersten Lichtfaserbündel die bauchförmige Durchbiegung und mit einem zweiten Lichtfaserbündel die radial auswärtsgerichtete Verdrängung des Verdrängungskörpers erfasst wird.

Nachdem der Lichtfaserleiter jeweils an einer radial auswärtsgerichteten Stirnfläche des Verdrängungskörpers anliegt (siehe das erste Ausführungsbeispiel), kann auch diese radiale Stirnfläche in bestimmter Weise ausgebildet sein. Sie kann gerade, bogenförmig oder profiliert ausgebildet sein, weil an dieser radialen Stirnfläche der eine oder die mehreren Lichtfaserleiter möglichst formschlüssig und gegen Abheben gesichert anliegen sollen.

Die Lichtfaserleiter können auch in das Material des Verdrängungskörpers eingegossen (Stoffschluss) oder in andere Weise (z.B. über einen Kraftschluss und/oder Formschluss) integriert sein.

Sie können auch angeklebt oder in die radiale Stirnfläche des Verdrängungskörpers eingeformt sein.

Es ist nicht unbedingt lösungsnotwendig, dass der eine oder die mehren Lichtfaserleiter an der radial nach außen gerichteten Stirnfläche des Verdrängungskörpers angeordnet sind. Sie können auch in dem Verdrängungskörper eingebettet sein und hierbei nicht nur an der radialen Stirnfläche angeordnet sein, sondern sie können stattdessen im Innenbereich des Verdrängungskörpers angeordnet sein, und zwar an einer derartigen Stelle, die an der radial auswärtsgerichteten Verformung des Verdrängungskörpers teilnimmt, um so eine Längenänderung am dort eingebetteten Lichtfaserleiter zu erfassen.

Wenn nun der Verdrängungskörper eine in vertikaler Richtung gehende Verformungskraft erfährt und diese Verformungskraft in eine radial auswärtsgerichtete Verformung umgesetzt wird, sind Steuerflächen notwendig, welche die Verformung des Verdrängungskörpers in eine radial auswärtsgerichtete Verformung übersetzen.

In einem bevorzugten Ausführungsbeispiel liegen die Steuerflächen radial innen am Verformungskörper an, und ein hierauf wirkender Pressdruck wird in den Verdrängungskörper eingeleitet und führt zu einer radial auswärtsgerichteten Verformung. In diesem Bereich (im Bereich der radial auswärtsgerichteten Verformungsfläche des Verdrängungskörpers) sind dann die der Längenänderung unterworfenen Lichtfaserleiter angeordnet.

Statt der Ausbildung von zwei voneinander getrennten Standringen (einem oberen und einem unteren Standring) ist es auch möglich, die beiden

Standringe zu einem Mono-Standring zusammenzufassen, der eine radial nach außen geöffnete Hohlkammer aufweist, in deren Bereich der Verdrängungskörper angeordnet ist, sodass der Aufnahmeraum einen radial umlaufenden Schlitz bildet, der nach außen geöffnet ist, sodass die sich hierdurch bildenden Schenkel dieses Schlitzes im Profil elastisch federnd ausgebildet sind.

Die Erfindung ist nicht darauf beschränkt, dass der Verdrängungskörper die vollständige Verformungsarbeit, die durch das Gewicht der Standzarge bedingt ist, aufnimmt. Es können auch mehrere Verdrängungskörper angeordnet sein, die im gegenseitigen Abstand in radialer Richtung am Messring angeordnet sind, wobei zum Beispiel ein innerer Verdrängungskörper im Wesentlichen die Gewichtskraft aufnimmt und der radial außen liegende Verdrängungskörper die Längenänderung der Lichtfaserleiter ausführt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: schematisiert ein Teilschnitt durch ein Silo mit einem darunter angeordneten Gewichtsmessring
Figur 2: ein Schnitt gemäß der Linie A-A in Figur 3
Figur 3: die Draufsicht auf die Anordnung in Höhe des oberen Standrings 2
Figur 3A: eine erste Ausführungsform für die Ausbildung der Lichtfaserleiter in Form eines Faserbündels
Figur 3B: eine zweite Ausführungsform von Lichtfaserleitern, die als Wicklung um den Verdrängungskörper gewickelt sind
Figur 4: die Draufsicht auf eine gegenüber Figur 3 abgewandelte Ausführungsform, bei der eine sektorweise Erfassung der Gewichtslast der Standzarge auf den Gewichtsmessring stattfindet
Figur 5: schematisiert eine gleiche Darstellung wie Figur 2
Figur 6: die Darstellung der Druckmesskräfte, die bei der sektorweisen Messung der Gewichtskraft nach Figur 4 entstehen
Figur 7: schematisierte Darstellung der Schräglage eines Silos
Figur 8: das erste Ausführungsprinzip der vorliegenden Erfindung, aus dem erkennbar ist, dass die Presskraft auf einen Verdrängungskörper zu einer radial auswärtsgerichteten Verformung des Verdrängungskörpers führt (Ruhezustand)
Figur 9: das gegenüber Figur 8 abgewandelte Ausführungsbeispiel für den Lastfall, bei dem der Lichtfaserleiter 5 in die radial auswärtsgerichtete Stellung 5' verformt wurde
Figur 10: ein Teilschnitt auf eine Darstellung gemäß Figur 11 mit Darstellung der Einzelteile des Messringes
Figur 11: ein Schnitt durch ein erstes Ausführungsbeispiel eines Messringes
Figur 12: ein Schnitt durch ein zweites Ausführungsbeispiel
Figur 13: ein Schnitt durch ein drittes Ausführungsbeispiel
Figur 14: ein Schnitt durch ein viertes Ausführungsbeispiel
Figur 15: schematisiert die Führung der Lichtfaserleiter im Ausführungsbeispiel nach Figur 14
Figur 16: ein Schnitt durch ein fünftes Ausführungsbeispiel
Figur 17: ein Schnitt durch ein sechstes Ausführungsbeispiel
Figur 18: ein Schnitt durch ein siebtes Ausführungsbeispiel
Figur 19: ein Schnitt durch ein achtes Ausführungsbeispiel
Figur 20: ein Schnitt durch ein neuntes Ausführungsbeispiel
Figur 21: ein Schnitt durch ein zehntes Ausführungsbeispiel
Figur 22: ein Schnitt durch ein elftes Ausführungsbeispiel
Figur 23: ein Schnitt durch ein zwölftes Ausführungsbeispiel
Figur 24: ein Teilschnitt durch ein weiteres Ausführungsbeispiel mit Darstellung weiterer Einzelheiten
Figur 25: eine Abwandlung des Ausführungsbeispiels nach Figur 24
Figur 26: eine Abwandlung der Ausführungsbeispiele nach Figuren 24 und 25
Figur 27: eine weitere Abwandlung der Ausführungsbeispiele nach Figuren 24 bis 26

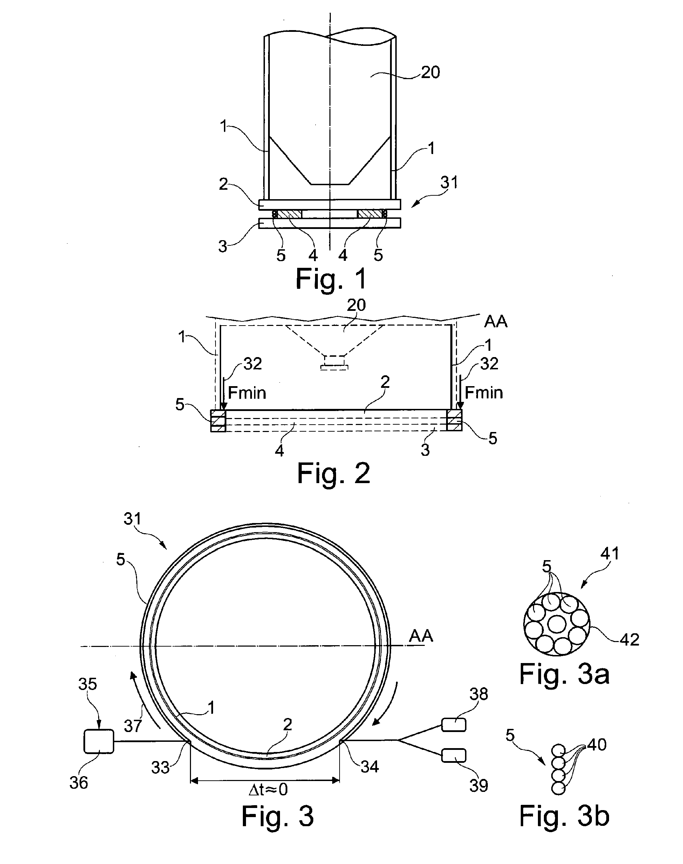

In Figur 1 ist allgemein ein Silo 20 dargestellt, das aus einem Rundprofil besteht, welches mit einer ringsumlaufenden Standzarge auf einem Gewichtsmessring 31 steht, der gegenüber einem nicht näher dargestellten Fundament 8 abgestützt ist.

Anstatt eines rund profilierten Silos in beliebiger Größe und Höhe können auch andere Großbehälter mit dem erfindungsgemäßen Gewichtsmessring 31 gewichtserfasst werden, wie zum Beispiel rechteckige, quadratische Großbehälter, Gewichtserfassungsplattformen für Kraftfahrzeug-Waagen und dergleichen mehr.

Es ist lediglich als Ausführungsbeispiel ein rund profiliertes Silo 20 dargestellt, welches die Erfindung jedoch nicht beschränkt.

Der Gewichtsmessring 31 besteht in einem ersten bevorzugten Ausführungsbeispiel aus einem oberen Standring 2, auf dem die Unterseite der Standzarge 1 abgestützt ist, aus einer dazwischen liegenden Gewichtserfassungseinrichtung und aus einem unteren Standring 3, der gegenüber einem Fundament 8 abgestützt ist.

Aus Figur 2 ergeben sich weitere Einzelheiten der Konstruktion.

Das Silo 20 ist lediglich mit seiner Auslaufseite dargestellt und es ist erkennbar, dass die im Winkel von 360 Grad umlaufende siloseitige Standzarge 1 in vollem

Umfang mit der unteren Stirnseite auf der Oberseite eines oberen Standringes 2 aufliegt. Im gezeigten Ausführungsbeispiel ist angenommen, dass lediglich das Silo-Leergewicht 32 auf den oberen Standring 2 wirkt, und die hierfür verwendete Messeinrichtung zunächst einen Ausgangswert erfasst.

In Figur 3 ist das grundsätzliche Messprinzip dargestellt. Über eine Laserquelle 35 und ein optisches Modul 36 wird eine Lichtwelle in einen Lichtfaserleiter 5 eingespeist, die in Pfeilrichtung 37 von der Ankopplungsstelle 33 ausgehend umläuft, und nach einem Umlauf von bevorzugt 360 Grad (oder weniger, zum Beispiel 330 Grad) wieder an einer Ankopplungsstelle 34 ausgeleitet wird, und dort über einen Empfänger 38 und eine Auswerteeinheit 39 ausgewertet wird. Zwischen dem Modul 36 und der Auswerteeinheit ist eine Verbindung, da ansonsten keine Phasendifferenz bestimmt werden kann.

Die Figuren 3A und 3B zeigen unterschiedliche Ausführungsformen der Lichtfaserleiter 5. Es kann sich um einen Lichtfaserleiter 5 handeln, der als einzige Wicklung über den Außenumfang eines Verdrängungskörpers 4 gewickelt ist, so wie dies schematisiert in Figuren 2 und 3 dargestellt ist. Es können jedoch auch eine Mehrzahl von Wicklungen 40 vorhanden sein, die alle über den radial nach außen gerichteten Außenumfang eines Verdrängungskörpers 4 gewickelt sind. Es kann sich gemäß Figur 3A auch um ein Faserbündel 41 handeln, in dem eine Mehrzahl von Lichtfaserleitern 5 angeordnet sind, wobei dieses Faserbündel 41 durch einen Kabelmantel 42 zusammengehalten ist.

Im gezeigten Ausführungsbeispiel nach Figur 3 ist nur beispielhaft dargestellt, dass die Ankopplungsstellen 33 und 34 im Winkelabstand zueinander versetzt angeordnet sind. Dies ist lediglich aus zeichnerischen Gründen dargestellt. In Wirklichkeit fallen die Ankopplungsstellen 33 und 34 annähernd zusammen oder liegen um wenige Winkelgrade auseinander.

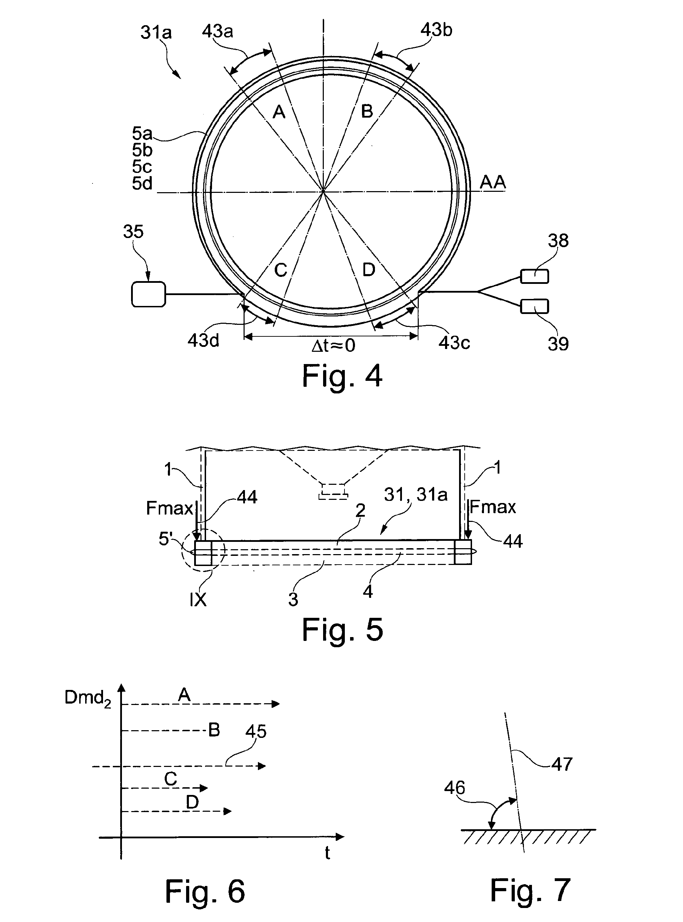

Die Figur 4 zeigt im Vergleich zu Figur 3 ein anderes Messprinzip. Dort ist lediglich schematisiert dargestellt, dass mit einer Laserquelle 35 eine Mehrzahl von Lichtfaserleitern 5a, 5b, 5c, 5d mit einer Lichtwelle versorgt wird. Die Messung des jeweiligen Lichtfaserleiters 5a-5d findet jeweils in einem getrennten Sektor statt. Zwischen dem Modul 36 und der Auswerteeinheit ist eine Verbindung, da ansonsten keine Phasendifferenz bestimmt werden kann.

Demnach ist der Umfang des Messrings in einer Anzahl von Messsektoren 43a, b, c, d unterteilt, wobei beispielsweise im Messsektor 43a die Längenänderung des Lichtfaserleiters 5a erfasst wird, im Messsektor 43b die Längenänderung des Lichtfaserleiters 5b usw.

Es werden demnach über den Umfang des Gewichtsmessringes 31 verteilte Sektormessungen des Gewichtes über die Erfassung der Längenausdehnung von zum Beispiel vier Lichtfaserleitern durchgeführt, sodass insgesamt nach Figur 6 vier verschiedene Messergebnisse aus den Messsektoren A, B, C und D erfasst werden.

Die Figur 6 zeigt, dass auf das Silo eine Windlast nach Figur 7 einwirkt, sodass die Vertikalachse 47 des Silos im Neigungswinkel 46 nach der einen Seite verdrängt wird, woraus sich ergibt, dass die Messergebnisse der Sektoren A und B relativ hoch sind, während die Messergebnisse der Gewichtsmessungen in den Sektoren C und D geringer sind. Es wird hieraus dann ein Mittelwert 45 ermittelt, der eine sehr genaue Gewichtsbestimmung des Gewichts des Silos zulässt.

Demnach zeichnet sich der Gewichtsmessring nach den Figuren 4 bis 7 dadurch aus, dass der Gewichtsmessring 31 a eine Vielzahl von Sektormessungen zulässt, die voneinander unabhängig sind.

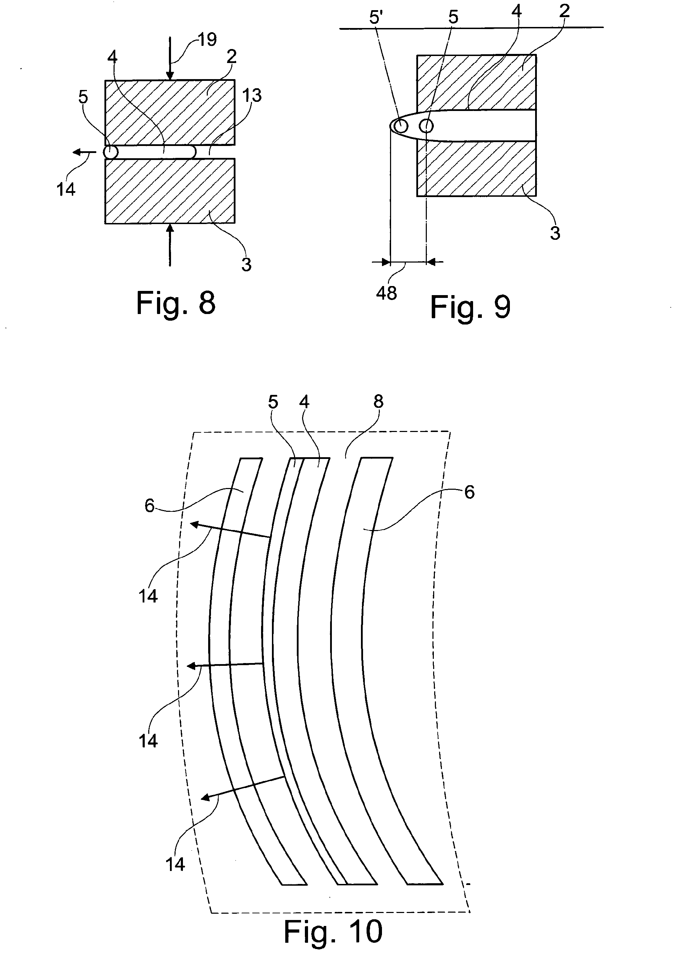

Die Figuren 8 und 9 zeigen das Grundprinzip der Erfindung, welches darin besteht, dass die Gewichtskraft im unverformten Zustand, die in Pfeilrichtung 19 - über den gesamten Umfang der siloseitigen Standzarge 1 - als Presskraft auf den oberen Standring 2 eingeleitet wird, auf die eine obere Fläche eines Verdrängungskörpers 4 eingeleitet wird, der in einem Aufnahmeraum 13 im Zwischenraum zwischen dem oberen Standring 2 und dem unteren Standring 3 eingelegt ist.

Die hierbei erfolgte elastische Verformung des Verdrängungskörpers 4 zur Seite hin und dies führt zu einer Durchmesservergrößerung des Verdrängungskörpers 4 und somit zu einer Längenänderung des am radialen Außenumfang mit dem Verdrängungskörper 4 verbundenen Lichtfaserleiters 5.

Wie in Figuren 3A und 3B dargestellt, kann es sich um einen Lichtfaserleiter 5 handeln oder auch um eine Wicklung 40 oder ein Faserbündel 41. Hierauf wird später nicht mehr eingegangen; für alle Ausführungsbeispiele gelten diese Ausführungen des Lichtfaserleiters 5 in gleicher Weise.

Im gezeigten Ausführungsbeispiel verformt sich demnach der Verdrängungskörper 4 radial auswärts gerichtet nach außen, und der vorherige Lichtfaserleiter 5 nimmt seine Position 5' gemäß Figur 9 ein, wodurch eine radiale Durchmesservergrößerung um den Ausdehnungsabstand 48 und ebenfalls eine Längenänderung des Lichtfaserleiters stattfindet, die umso größer ist, je mehr Wicklungen 40 um den Verdrängungskörper 4 gewickelt sind.

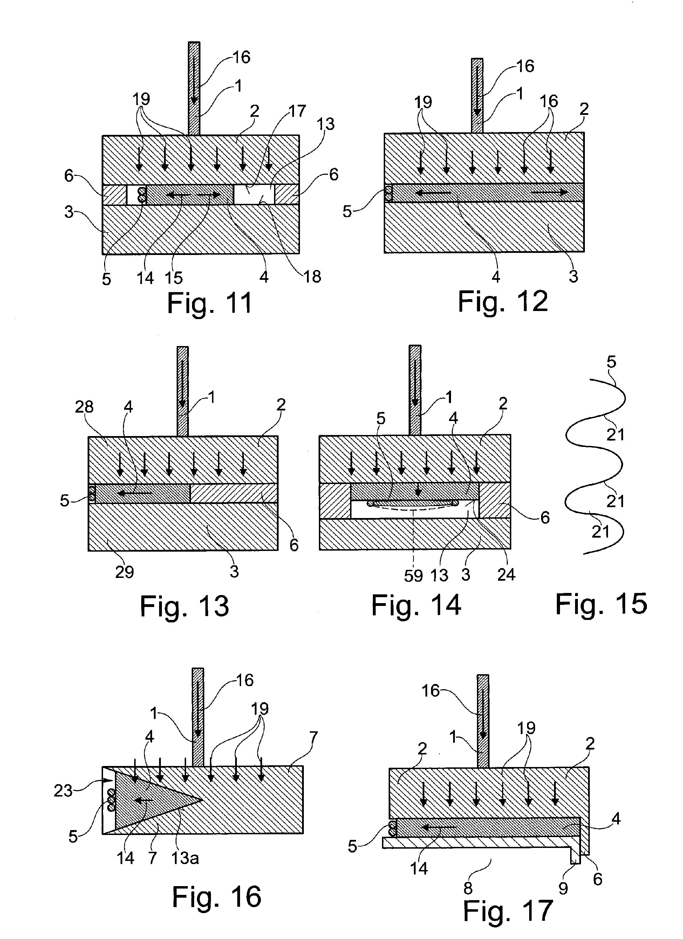

Die Figur 10 zeigt in Verbindung mit der Figur 11 ein erstes Ausführungsbeispiel, wobei die Standzarge 1 etwa im Mittenbereich auf dem oberen Standring 2 aufsitzt, und dass etwa fluchtend ein Aufnahmeraum 13 darunter angeordnet ist, in dem symmetrisch eine erste Ausführungsform eines ringförmigen oder schlauchförmigen oder scheibenförmigen, sich über den gesamten Umfang der Standzarge erstreckenden Verdrängungskörpers 4 angeordnet ist.

Durch die Gewichtskraft, die die Standzarge 1 in Pfeilrichtung 16 auf den oberen Standring 2 ausübt, wird damit eine über den Umfang gleichmäßige Presskraft 19 auf den Standring 2 erzielt. Der Standring 2 besteht bevorzugt aus einem nicht verformbaren, lastübertragenden Metall-, Kunststoff oder Betonmaterial.

Der Aufnahmeraum 13 ist radial außen und innen durch jeweils eine Zwischenplatte 6 abgestützt, die bevorzugt rechteckförmig profiliert ist.

Dies ist zum Beispiel auch in Figur 10 dargestellt. Die Dicke oder Höhe der Zwischenplatte 6 ist im ersten Ausführungsbeispiel so bemessen, dass sie kleiner ist als die Höhe des Verdrängungskörpers 4, sodass in diesem Ausführungsbeispiel vornehmlich der Verdrängungskörper 4 zunächst mit der Presskraft belastet wird, bevor die Presskraft nach der Verformung des Verdrängungskörpers 4 von den dünneren Zwischenplatten 6 aufgenommen wird.

In einem zweiten Ausführungsbeispiel, welches ebenfalls für die Figuren 10 und 11 gilt, ist hingegen vorgesehen, dass die Höhe der Zwischenplatten 6 höher ist als die Höhe des Verdrängungskörpers 4, sodass eine in Pfeilrichtung 16 auf den Aufnahmeraum 13 eingeleitete Presskraft zu einer Durchbiegung der oberen Pressfläche 17 des Aufnahmeraums 13 führt, sodass lediglich diese Durchbiegung zu einer radial einwärts und radial auswärts - in den Pfeilrichtungen 14 und 15 gerichteten - Verformungskraft auf den Verdrängungskörper 4 führen.

Der Verdrängungskörper 4 wird zwischen den beiden gegenüberliegenden Pressflächen 17 und 18 im Aufnahmeraum 13 komprimiert und erfährt eine radiale Ausdehnung in den Pfeilrichtungen 14 und 15.

Im gezeigten Ausführungsbeispiel ist am radial nach außen gerichteten Außenumfang des Verdrängungskörpers 4, der zum Beispiel als umlaufende oder als sektorförmige Scheibe oder als Ring ausgebildet ist, der eine oder mehrere Lichtfaserleiter 5 formschlüssig angeordnet.

Entsprechend der Gewichtskraft, die auf den Verdrängungskörper 4 verformend einwirkt, erfährt damit auch der Lichtfaserleiter 5 eine entsprechende Längenänderung.

In Figur 12 ist ein anderes Ausführungsbeispiel dargestellt, bei der Aufnahmeraum nicht beidseitig von einer Zwischenplatte 6 begrenzt ist, sondern die gesamte in Pfeilrichtung 19 von oben wirkende Presskraft wirkt auf die Planfläche (Oberseite) des Verdrängungskörpers 4, der damit eine Verdrängung in radialer Richtung erfährt, sodass damit eine Längenänderung auf die an der äußeren Stirnseite angeordneten Lichtfaserleiter 5 erfolgt.

Im Ausführungsbeispiel nach Figur 13 ist im Vergleich zu Figur 11 dargestellt, dass die Zwischenplatte 6 radial innen angeordnet ist, und der Aufnahmeraum 13 nach außen hin geöffnet ist, wodurch sich im Schnitt zwei gegenüberliegende, gegeneinander biegbare Schenkel 28, 29 für die Pressflächen 18 und 17 ergeben, die zwischen sich den Verdrängungskörper 4 einschließen und zusammenpressen. Es erfolgt eine lediglich in radialer Richtung nach außen gerichtete Verformung (in Pfeilrichtung 14), weil der Verdrängungskörper 4 nach Figur 13 radial einwärts durch die Zwischenplatte 6 abgestützt ist.

Die Figur 14 zeigt als abgewandeltes Ausführungsbeispiel, dass auch eine Durchbiegung der Planfläche (Oberseite) des Verdrängungskörpers 4 zu einer Längenänderung von an der Planfläche angeordneten Lichtfaserleitern 5 führt. Die Figur 14 zeigt, dass die gemäß Figur 15 mäanderförmig an der Planfläche (Unterseite) des Verdrängungskörpers 4 angeordneten Lichtfaserleiter 5 mit dem Verdrängungskörper 4 derart verbunden sind, dass aufgrund der Mäanderform eine abschnittsweise Messung der Längenveränderung in den Abschnitten 21 des mäanderförmig verlaufenden Lichtfaserleiters 5 stattfindet. Es wird demnach die Durchbiegung des Verdrängungskörpers 4 entsprechend der Verformungskurve 59 erfasst, wobei die Verformungskurve 59 zu einer Längenänderung der mäanderförmig verlegten Lichtfaserleiter 5 gemäß Figur 15 führt.

Demnach wird die Verformung an der Verformungsfläche 24 an der Unterseite des Verdrängungskörpers 4 erfasst, während bei den anderen Ausführungsbeispielen stets die Verformung an der radial nach außen gerichteten Stirnseite des Verdrängungskörpers 4 erfasst wird.

Die Figur 16 zeigt als weiteres Ausführungsbeispiel, dass der Verdrängungskörper 4 nicht notwendigerweise als umlaufender, etwa rechteckig oder quadratisch profilierter Kunststoffkörper ausgebildet sein kann, sondern er kann auch kegelförmig profiliert sein, wie in Figur 16 dargestellt. Dort ist erkennbar, dass an der großflächigen, nach außen gerichteten Kegelfläche (radiale Stirnfläche 23) der oder die Lichtfaserleiter 5 angeordnet sind, und aufgrund der Kegelform eine sehr starke bogenförmige, nach außen gerichtete Verformung der radialen Stirnfläche 23 stattfindet, weil der kegelförmige Verdrängungskörper 4 eine starke Verformungskraft in Pfeilrichtung 14 durch die Pressflächen 17 und 18 erfährt, die ebenfalls konisch gegeneinander gerichtet sind, und somit auch den konischen Verdrängungskörper 4 zusammenpressen.

Der Aufnahmeraum 13a ist demnach konisch ausgebildet, während er in den anderen Ausführungsbeispielen rechteckförmig oder quadratisch profiliert ist.

Im Unterschied zu den Ausführungsbeispielen nach Figuren 11 bis 13 zeigt die Figur 17 noch weitere, abgewandelte Merkmale, nämlich, dass der untere Standring 3 entfällt und dass der Verdrängungskörper 4 direkt auf einem Fundamentring 9 angeordnet ist, der etwa im Querschnitt L-förmig profiliert ist und der unmittelbar auf dem Fundament 8 aufsitzt.

Damit ist eine besonders einfache Anpassung an bereits bestehende Behälter möglich, weil es ausreicht, den siloseitig vorhandenen Standring eines Großbehälters, wie zum Beispiel des Silos 20, auf einem oberen Standring 2 aufzusetzen, der unmittelbar über den Verdrängungskörper 4 auf einem Fundament 8 über einen - in der Regel ebenfalls stets bauseits vorhandenen - Fundamentring 9 abgestützt ist.

Der Fundamentring 9 ist bevorzugt im Fundament 8 einbetoniert, und auf diesem einbetonierten Fundamentring 9 kann somit der Verdrängungskörper 4 in der Art einer Matte oder eines anderes kompressiblen Verdrängungskörpers angeordnet werden, wobei die der Längenänderung unterworfenen Lichtfaserleiter 5 über den Außenumfang des Verdrängungskörpers 4 aufgewickelt sind.

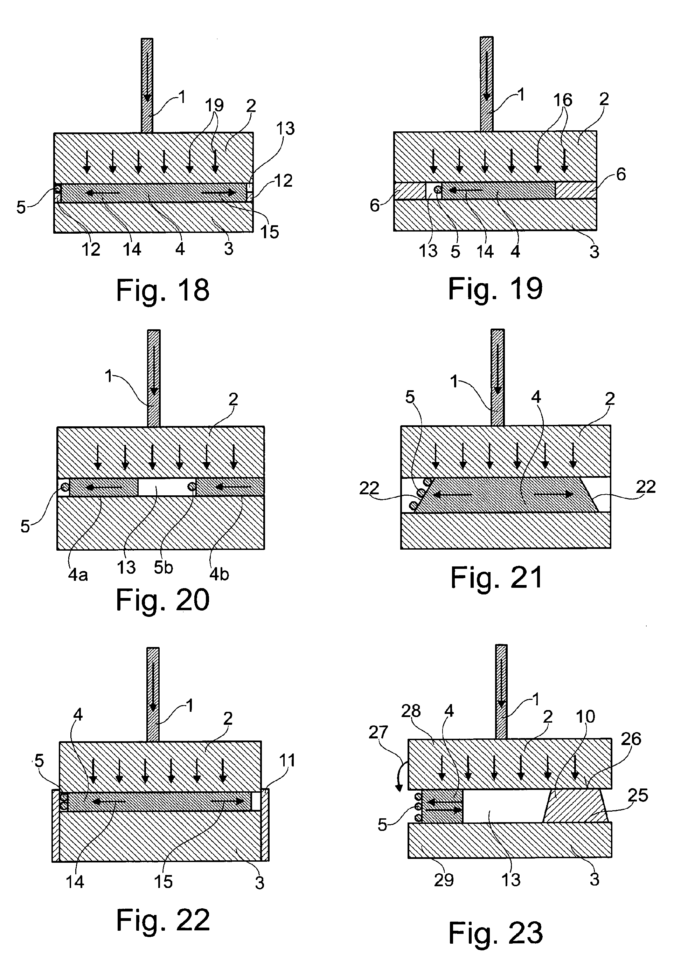

Im Ausführungsbeispiel nach Figur 18 ist weiterhin angegeben, dass sich der Verdrängungskörper 4 nach beiden Richtungen, das heißt radial auswärts in Pfeilrichtung 14 und radial einwärts in Pfeilrichtung 15, ausdehnen kann, wobei die radial einwärtsgerichtete Verformung in Pfeilrichtung 15 durch die radial einwärtsgerichtete rechte Fixierungsplatte 12 begrenzt wird und die radial auswärts angeordnete, linke Fixierungsplatte 12 unterhalb des der Längenänderung unterworfenen Lichtfaserleiters 5 angeordnet ist. Der Lichtfaserleiter 5 kann sich somit frei radial nach außen ausdehnen, während die in gleicher Richtung gerichtete Ausdehnung des Verdrängungskörpers 4 begrenzt ist.

Im Ausführungsbeispiel nach Figur 19 sind zwei gegenüberliegend angeordnete und auf gleicher Ebene liegende Zwischenplatten 6 vorgesehen, die den Aufnahmeraum 13 nach beiden Seiten hin begrenzen, wobei wichtig ist, dass sich der Verdrängungskörper 4 an der radial innen liegenden Seite an der inneren (rechten) Zwischenplatte 6 stirnseitig abstützt und an der gegenüberliegenden, radial außen liegenden Seite ein Ausdehnungsspiel hat, Dadurch ergibt sich ein Aufnahmeraum 13, in dem der der Längenänderung unterworfene Lichtfaserleiter 5 angeordnet ist.

Es gelten im Übrigen in Bezug auf die Größenverhältnisse im Hinblick auf die der Höhe der Zwischenplatte 6 im Vergleich zur Höhe des Verdrängungskörpers 4 in allen beschriebenen Ausführungsformen die gleichen Verhältnisse, wie sie anhand der Figur 11 beschrieben wurden.

Im Ausführungsbeispiel nach Figur 20 ist dargestellt, dass auch mehrere Verdrängungskörper auf gleicher oder unterschiedlichen Ebenen angeordnet werden können, wobei ein erster Verdrängungskörper 4a ist radial außen und auf gleicher Ebene wie ein zweiter auf gleicher Ebene liegender weiterer Verdrängungskörper 4b radial einwärts angeordnet. Beide Verdrängungskörper 4a, 4b bilden zwischen sich einen Aufnahmeraum 13.

Jedem Verdrängungskörper 4a, 4b ist ein der Längenänderung unterworfener Lichtfaserleiter 5a, 5b zugeordnet, sodass zwei voneinander getrennte Messungen durchgeführt werden. Man erhält hierdurch zwei Messergebnisse, die miteinander verrechnet (z.B. summiert) werden, um so ein noch genaueres Messergebnis zu erhalten.

Ebenso kann es in einer Weiterbildung der Erfindung vorgesehen sein, dass zur Temperaturkompensation im Aufnahmeraum 13 ein - zeichnerisch nicht dargestellter - zusätzlicher Lichtfaserleiter verlegt ist, dessen Messergebnis zur Temperaturkompensation der gewichtsbestimmenden Lichtfaserleiter 5a, 5b verwendet wird. Die Temperaturkompensation kann nach einem der beiden im allgemeinen Beschreibungsteil angegebenen Verfahren erfolgen.

Allgemein gilt für alle vorher und später beschriebenen Ausführungsbeispiele, dass an einer beliebigen Stelle im Messaufbau ein zusätzlicher Lichtfaserleiter verlegt werden kann, der keiner Längenänderung unterworfen ist, und dessen Messergebnis zur Temperaturkompensation verwendet wird.

Im Ausführungsbeispiel nach Figur 21 ist dargestellt, dass der Verdrängungskörper 4 als Kegelstumpf ausgebildet ist, sodass Schrägflächen 22 vorhanden sind und an der jeweils radial außen liegenden Schrägfläche 22 der eine oder die mehreren Lichtfaserleiter 5 formschlüssig angebracht sind und der Längenänderung unterworfen sind.

Vorteil der Ausbildung einer einzigen Schrägfläche 22 oder von zwei spiegelsymmetrisch gegenüberliegenden Schrägflächen ist, dass bei geringerem Gewicht eine geringere Auflagefläche bereits schon zu einer Komprimierung des Verdrängungskörpers über ein sehr großes Verdrängungsmaß führt, während mit zunehmendem Gewicht des Silos der Verdrängungskörper weniger radial nach außen verdrängt wird.

Ein anderes Ausführungsbeispiel zeigt die Figur 22, das im Vergleich zur Figur 19 die gleichen Funktionen enthält. Der Verdrängungskörper 4 wird radial einwärts und radial auswärts in den Pfeilrichtungen 14 und 15 verdrängt, wobei der obere Standring 2 durch eine Führungsplatte 11 am unteren Standring 3 geführt wird, um ein Schwimmen des oberen Standringes 2 im Vergleich zum unteren Standring 3 zu vermeiden.

Es handelt sich demnach um eine Sicherung gegen horizontales Verschieben des oberen Standringes 2.

In Figur 23 ist als weiteres Ausführungsbeispiel gezeigt, dass im Zwischenraum zwischen dem oberen Standring 2 und dem unteren Standring 3 eine kegelstumpfförmige Zwischenplatte 10 angeordnet sein kann, die über obere und untere Stumpfflächen 25, 26 jeweils mit dem oberen und unteren Standring 2, 3 verbunden ist. Nachdem die obere Stumpffläche 26 kleiner ist als die untere Stumpffläche 25, führt eine Gewichtsbelastung des Standringes 2 zu einem Verschwenken des oberen Schenkels 28 des Standrings 2 in Pfeilrichtung 27, sodass der Aufnahmeraum 13 etwa keilförmig zusammengedrückt wird und der dort angeordnete Verdrängungskörper 4 eine Verdrängung in den Pfeilrichtungen 14 und 15 erfährt, wobei an dessen Außenumfang der oder die Lichtfaserleiter 5 angeordnet sind.

Anstatt eines rechteckigen oder quadratischen Verdrängungskörpers 4 kann somit auch ein kegelförmiger Verdrängungskörper 4 nach Figur 16 verwendet werden, wobei in diesem Fall der Standring 2 mit dem Standring 3 ein einstückiges Teil bildet, das als Kegelplatte 7 nach Figur 16 ausgebildet ist, die radial nach außen geöffnet ist.

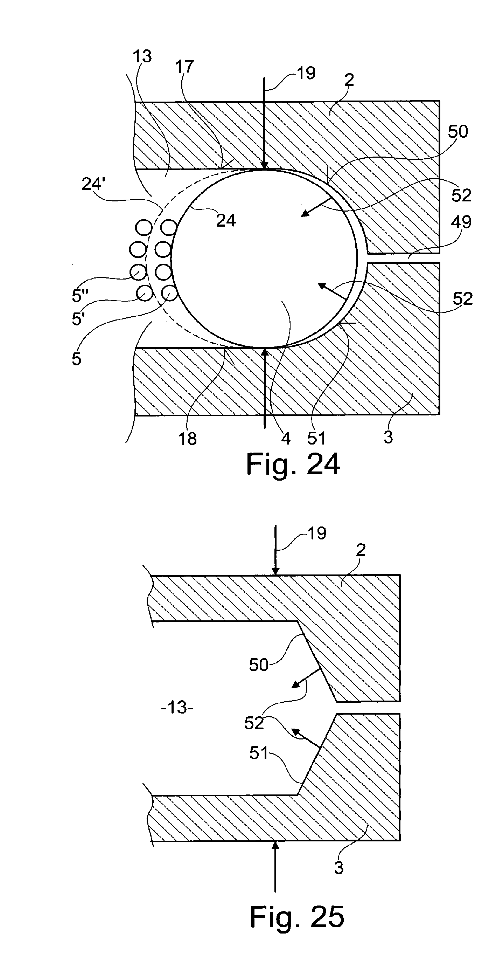

In Figur 24 ist ein abgewandeltes Ausführungsbeispiel dargestellt, aus dem sich ergibt, dass der Verdrängungskörper 4 nicht notwendigerweise flach profiliert als Rechteck, Quadrat, polygonaler Körper oder dergleichen ausgebildet sein muss. Er kann auch rund profiliert sein und zum Beispiel als massiver Kunststoffring oder als Hohlschlauch ausgebildet sein.

Im Fall der Ausbildung als Hohlschlauch kann dieser mit einem Medium gefüllt sein, wie zum Beispiel einem Gas oder einem Hydraulikmedium.

Das Grundprinzip nach den Figuren 24 und 25 besteht darin, dass der rund oder mehrkantig profilierte Verdrängungskörper 4 im Aufnahmeraum 23 angeordnet ist, sodass eine Gewichtslast in Pfeilrichtung 19 zu einer radialen Verformung des Verdrängungskörpers 4 führt. Vornehmlich werden die radial innen liegenden Steuerflächen 50 und 51 auf den Verdrängungskörper wirken und diesen in Pfeilrichtung 52 radial auswärts verformen, sodass er sich ausbeult. Dies ist mit der Verformungskurve 24' dargestellt.

Auf der Verformungsfläche 24 sind die einen oder mehreren Lichtfaserleiter 5 formschlüssig und/oder stoffschlüssig und/oder krafschlüssig angebracht, die somit die Verformung der Verformungsfläche 24 in die Verformungsfläche 24' nachbilden und hierdurch eine erfassbare Längenänderung erfahren.

Die fluchtend gegenüberliegenden Pressflächen 18, 19 werden durch seitlich daran anschließende Steuerflächen 50, 51 ergänzt, um so eine in radialer Richtung nach außen gerichtete Ausbeulung des Verdrängungskörpers 4 zu erreichen.

Auch hier ist im Ausführungsbeispiel dargestellt, dass zwischen dem oberen Standring 2 und dem unteren Standring 3 ein umlaufender Abstand 49 vorhanden ist, sodass der Verdrängungskörper 4 vornehmlich von der Gewichtspresskraft in Pfeilrichtung 19 verformt wird.

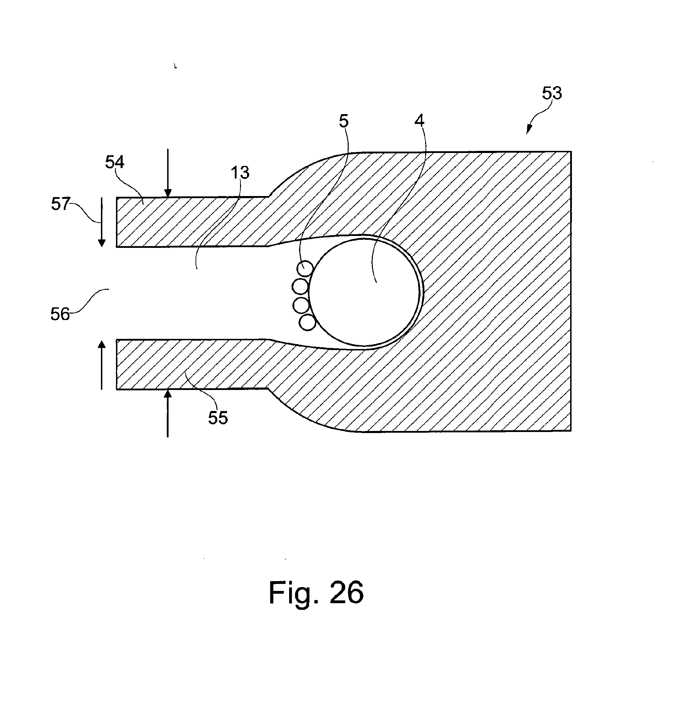

In einem anderen, nicht näher dargestellten Ausführungsbeispiel kann jedoch der Abstand 49 auch entfallen und der obere und der untere Standring 2, 3 können ein einziges Stück bilden, wodurch sich zusammendrückbare Schenkel 28, 29 (siehe Fig. 23) oder Schenkel 54, 55 bilden, wie es anhand des Ausführungsbeispieles nach Figur 26 dargestellt ist.

Ebenso gilt - wie im Ausführungsbeispiel nach Figur 11 beschrieben -, dass sich entweder bei Einwirkung einer Gewichtskraft zunächst der Abstand 49 schließt und auf Null geht, und erst dann der Verdrängungskörper 4 verdrängt wird oder umgekehrt, dass zuerst der Verdrängungskörper 4 verformt wird und sich erst danach der Abstand 49 schließt.

Die Figur 25 zeigt im Vergleich zu Figur 24, dass nicht nur rund profilierte Steuerflächen 50, 51 vorhanden sein können, sondern sie können auch konisch ausgebildet sein, wie es anhand der Steuerflächen 50, 51 in Figur 25 dargestellt ist. Durch diese Konizität wird noch eine stärkere Verformungskraft auf den Verdrängungskörper 4 in Pfeilrichtung 14 erreicht.

Die Figur 26 zeigt in Abwandlung des Ausführungsbeispieles nach Figuren 24 und 25, dass nunmehr der obere und untere Standring 2, 3 zu einem Mono-Standring 53 vereinigt ist, der einen umlaufenden, radial nach außen geöffneten Aufnahmeraum 13 bildet, in dessen Bereich nunmehr der Verdrängungskörper 4 angeordnet ist, an dessen radialen Außenumfang der eine oder die mehreren Lichtfaserleiter 5 angeordnet sind. Dies führt nach Figur 26 dazu, dass die nach außen gerichteten geöffneten Schenkel 54, 55 des Mono-Standrings 53 eine Schwenkbewegung in Pfeilrichtung 57 ausführen und hierdurch der Abstand 56 zwischen den beiden gegenüberliegenden Schenkeln 54 und 55 verringert wird, wodurch auch der dazwischen angeordnete Verdrängungskörper 4 komprimiert wird.

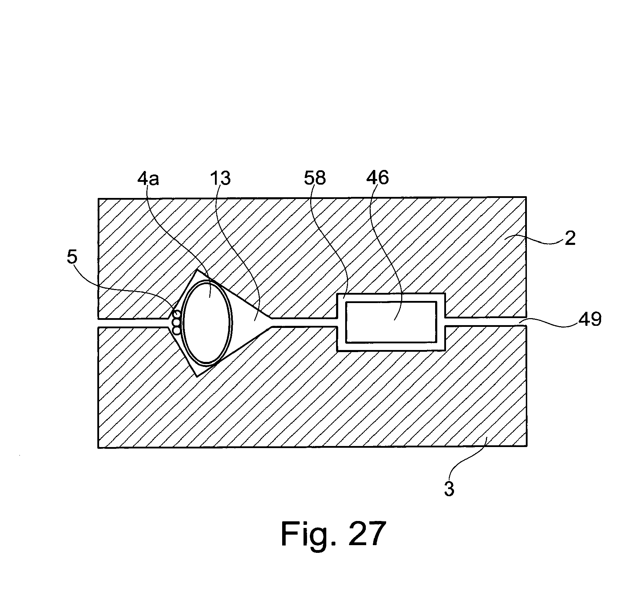

Die Figur 27 zeigt als weiteres Ausführungsbeispiel, dass es nicht lösungsnotwendig ist, den Verdrängungskörper zusammen mit dem Lichtfaserleiter auszubilden. Es können auch zwei Verdrängungskörper 4a, 4b vorhanden sein, wobei der erste Verdrängungskörper 4b in einer ersten Ringnut 58 angeordnet ist, und im Wesentlichen die Gewichtslast des Silos aufnimmt, und sich elastisch verformt, während der zweite Verdrängungskörper 4a zur Messung der Längenänderung der dort aufgebrachten Lichtwellenleiter verwendet wird.

Die Gewichtskraft wird dann vornehmlich auf den ersten Verdrängungskörper 4b ausgeübt, der sich dadurch radial verformt und diese radiale Verformungsarbeit auf den zweiten Verdrängungskörper 4a überträgt, der die eigentliche Gewichtsmessung über die Längenänderungsmessung an den Lichtfaserleitern 5 ausführt.

### Zeichnungslegende

- 1: Standzarge
- 2: oberer Standring
- 3: unterer Standring
- 4: Verdrängungskörper a, b
- 5: Lichtfaserleiter 5'
- 6: Zwischenplatte (Rechteck)
- 7: Kegelplatte

- 8: Fundament
- 9: Fundamentring
- 10: Zwischenplatte (Kegelstumpf)
- 11: Führungsplatte
- 12: Fixierungsplatte
- 13: Aufnahmeraum 13a
- 14: Pfeilrichtung
- 15: Pfeilrichtung
- 16: Pfeilrichtung
- 17: Pressfläche oben
- 18: Pressfläche unten
- 19: Presskraft
- 20: Silo
- 21: Abschnitt
- 22: Schrägfläche (von 4)
- 23: radiale Stirnfläche (von 4)
- 24: Verformungsfläche (von 4) 24'
- 25: untere Stumpffläche (von 10)
- 26: obere Stumpffläche (von 10)
- 27: Pfeilrichtung
- 28: Schenkel
- 29: Schenkel
- 30:
- 31: Gewichtsmessring 31 a
- 32: Silo-Leergewicht
- 33: Ankopplungsstelle
- 34: Ankopplungsstelle
- 35: Laserquelle
- 36: optisches Modul
- 37: Pfeilrichtung
- 38: Empfänger
- 39: Auswerteeinheit
- 40: Wicklung (von 5)
- 41: Faserbündel
- 42: Kabelmantel
- 43: Messsektor a, b, c, d
- 44: Silo-Gesamtgewicht
- 45: Mittelwert
- 46: Neigungswinkel
- 47: Vertikalachse
- 48: Ausdehnungsabstand
- 49: Abstand
- 50: Steuerfläche oben
- 51: Steuerfläche unten
- 52: Pfeilrichtung
- 53: Mono-Standring
- 54: Schenkel
- 55: Schenkel
- 56: Abstand
- 57: Pfeilrichtung
- 58: Ringnut
- 59: Verformungskurve

## Patentansprüche

1. Vorrichtung zur Gewichtserfassung von Großbehältern, insbesondere Silos oder dgl., die mit einer Standzarge (1) auf einem Fundament (8) oder einer anderen Referenzfläche abgestützt sind, mittels einer faseroptischen Deformationsmessanordnung, bei der in mindestens einen gewichtsbedingt deformierbaren Lichtfaserleiter (5, 5') eine Lichtwelle einleitbar ist, und die Deformation des Lichtfaserleiters durch Erfassung der Veränderung mindestens eines Parameters der Lichtwelle mit einer optisch-elektronischen Messanordnung erfasst und ausgewertet wird, **dadurch gekennzeichnet, dass** die Standzarge (1) an der Fußseite auf einem am Außenumfang umlaufenden, mindestens teilweise axial verformbaren elastischen Gewichtsmessring (2,3; 31, 31a) gegenüber dem Fundament (8) oder einer anderen Referenzfläche abgestützt ist, und dass die durch das Silogewicht bedingte axiale Verformung des Gewichtsmessrings (2,3; 31, 31a) auf mindestens einen Lichtfaserleiter (5, 5') im Sinn einer Längenänderung einwirkt, die von der Messvorrichtung erfassbar ist.

2. Vorrichtung nach Anspruch 1, **dadurch gekennzeichnet, dass** durch die axiale Verformung des Gewichtsmessringes (2, 3; 31, 31a) der Lichtfaserleiter (5, 5') in radialer Richtung ausdehnbar ist und eine auswertbare Längenänderung erfährt.

3. Vorrichtung nach Anspruch 1 oder 2, **dadurch gekennzeichnet, dass** die Gewichtslast des Silos (20) oder eines anderen Großbehälters über den Gewichtsmessring (2, 3; 31, 31a) mindestens teilweise auf einen mindestens teilweise über den Umfang des Gewichtsmessrings (31, 31a) sich erstreckenden und elastisch deformierbaren Verdrängungskörper (4, 4a, 4b) im Sinn einer axialen Stauchkraft wirkt, und dass am Außenumfang des Verdrängungskörpers (4, 4a, 4b) der mindestens eine Lichtfaserleiter (5, 5') befestigt ist, der mit der radialen Verformung des Verdrängungskörpers (4, 4a, 4b) eine auswertbare Längenänderung erfährt.

4. Vorrichtung nach einem der Ansprüche 1 bis 3, **dadurch gekennzeichnet, dass** der Gewichtsmessring (31) aus einem oberen Standring (2), auf dem die Unterseite der Standzarge (1) des Silos (20) abgestützt ist und aus einem, mit dem oberen Standring etwa axial fluchtend angeordneten, unteren Standring 3, der gegenüber einem Fundament 8 abgestützt ist, besteht und dass im Zwischenraum zwischen dem oberen und dem unteren Standring(2, 3) der kompressible Verdrängungskörper (4, 4a) mit dem mindestens einen Lichtfaserleiter (5, 5') angeordnet ist.

5. Vorrichtung nach Anspruch 4, **dadurch gekennzeichnet, dass** der obere Standring (2) ein vom unteren Standring (3) getrenntes Teil bilden.

6. Vorrichtung nach Anspruch 4, **dadurch gekennzeichnet, dass** der obere Standring (2) mit dem unteren Standring (3) mindestens in einem radial einwärts gelegenen Bereich des Durchmessers mit einander verbunden ist und im radial auswärts gelegenen Bereich zwei gegenüberliegend angeordnete, biegbare Schenkel (28, 29) ausbildet, zwischen denen der Verdrängungskörper (4) angeordnet ist.

7. Vorrichtung nach einem der Ansprüche 1 bis 6, **dadurch gekennzeichnet, dass** der Verdrängungskörper (4, 4a, 4b) aus einem elastisch federnden, stauchfähigen Material besteht.

8. Vorrichtung nach einem der Ansprüche 1 bis 7, **dadurch gekennzeichnet, dass** der Verdrängungskörper (4, 4a, 4b) als profilierter Vollkörper ausgebildet ist.

9. Vorrichtung nach einem der Ansprüche 1 bis 7, **dadurch gekennzeichnet, dass** der Verdrängungskörper (4, 4a, 4b) als Hohlkörper ausgebildet ist, der mit einem Medium gefüllt ist.

10. Vorrichtung nach einem der Ansprüche 1 bis 9, **dadurch gekennzeichnet, dass** über den Umfang des Gewichtsmessringes (31) verteilt jeweils Teil-Messungen des Gewichtes des Silos (20) über mehrere Messsektoren (43a-d) erfolgt, wobei in jedem Messsektor (43a-d) eine getrennte Erfassung der Längenausdehnung von mehreren, voneinander getrennten Lichtfaserleitern erfolgt.
